# EUROPÄISCHE PATENTANMELDUNG

(11) **EP 1 209 406 A1**
(43) Veröffentlichungstag der Anmeldung: **29.05.2002**
(21) Anmeldenummer: 01126750.7
(22) Anmeldetag: 09.11.2001
(51) Int. Cl.: F16L 37/14

(54) **Schnellverbindungseinrichtung**

(30) Priorität: 23.11.2000 DE 10058087
(71) Anmelder: Eaton Fluid Power GmbH, 76532 Baden-Baden (DE)
(72) Erfinder: Halbrock, Bernd, 75203 Königsbach-Stein (DE); Twardawski, Harald, 76437 Rastatt (DE); Luft, Thomas, 76185 Karlsruhe (DE); Huck, Michael Markus, 77839 Bühlertal (DE)
(74) Vertreter: Patentanwälte Rüger, Barthelt & Abel

(57) **Zusammenfassung**

Eine Verbindungseinrichtung (1) ist insbesondere als Schnellkupplungseinrichtung zur Verbindung von Fluidkanälen an Kraftfahrzeugen vorgesehen. Die Verbindungseinrichtung (1) weist zwei axial gegeneinander zu spannende Verbindungselemente (2,3) auf, die mit einem axial zu deformierenden Dichtungselement (19) abgedichtet sind. Die Deformation des Dichtungselements (19) wird durch mechanische Anschlagmittel (21,24) (Abstützflächen) begrenzt. Zur Spannung der Verbindungselemente (2,3) gegeneinander dient eine Keil-Spanneinrichtung (28).

## Beschreibung

Die Erfindung betrifft eine Verbindungseinrichtung, insbesondere eine Schnellverbindungseinrichtung für den Anschluss oder die Verbindung von Fluidleitungen.

Es ist häufig erforderlich, Fluidleitungen miteinander zu verbinden oder an Behälter anzuschließen. Dabei kommt es insbesondere im Automobilbau auf zuverlässige Dichtheit an und darüber hinaus auf leichte Montierbarkeit. Sowohl die leichte Montierbarkeit als auch die Dichtigkeit müssen in Großserie garantiert werden, d.h. weitgehend unabhängig von möglichen Fertigungstoleranzen bei der Präzision der beteiligten Kupplungselemente und sonstigen Störeinflüssen.

Aus der DE 197 37 704 A1 ist eine Rohranschlusskupplung mit Stecksicherung bekannt. Die Rohranschlusskupplung dient dem Anschluss von Rohrenden, die mit einer Ringwulst und einem vor der Ringwulst sitzenden O-Ring versehen sind. Als Anschlusselement ist ein mit einer Zentralöffnung versehenes Buchsenteil vorgesehen, das zwei seitliche Durchstecköffnungen für eine Steckgabel aufweist. Zum Führen der Steckgabel beim Einsteckvorgang sind an dem Buchsenteil Schrägflächen vorgesehen, die der Steckgabel beim Einstecken eine Spannbewegung erteilen. Die Steckgabel greift hinter die an dem Rohrende vorgesehene Ringwulst und drückt diese in Rohreinsteckrichtung so gegen eine Ringschulter, dass der dazwischen angeordnete O-Ring gespannt wird. Die Schrägflächen bilden eine Kulissenführung für die Steckgabel, die der Steckgabel im ersten Teil ihres Einsteckwegs eine Spannbewegung erteilt, wobei sie nach Durchlauf der Spannbewegung keine weitere Bewegung in Rohreinsteckrichtung erfährt.

Diese Steckkupplung erfordert eine relativ präzise Einhaltung der vorgegebenen Abmessungen des Einsteckteils des Rohrendes und der Steckgabel, denn der feste Sitz des Rohrendes ist bei eingesteckter Steckgabel nur dann sichergestellt, wenn alle beteiligten Toleranzen zusammengenommen kleiner sind als die durch den O-Ring bzw. seinen Federweg vorgegebene Maximaltoleranz.

Eine ähnliche Verbindungseinrichtung ist aus der US-PS 5,513,882 bekannt. Diese weist einen Aufnahmeteil mit einer abgestuften Bohrung auf, in dessen Stufe eine axial eingestochene Ringnut untergebracht ist. In das Aufnahmeteil ist ein mit einem Ringflansch versehenes zweites Verbindungsteil einzustecken, wobei der Ringflansch dann gegen den O-Ring drückt. Zur Sicherung dieser Verbindung ist ein u-förmiger Einsteckbügel vorgesehen, dessen freie Enden abgeschrägt sind und der durch Seitenöffnungen des Aufnahmeteils zu stecken ist. Auch hier gelten die oben genannten Nachteile.

Eine weitere Kupplungseinrichtung ist aus der DE 31 43 015 C3 bekannt. Die Kupplungshälften dieser Schnellkupplung werden durch einen Buchsenteil und einen Steckerteil gebildet. Der Buchsenteil weist eine zylindrische Innenumfangsfläche auf. Der Steckerteil ist mit einer zylindrischen Außenumfangsfläche versehen. Zwischen beiden Zylinderflächen ist ein O-Ring als Dichtungselement gehalten. Zur mechanischen Sicherung und Lagerung dient eine Kunststoffbuchse, die dem O-Ring benachbart in dem Buchsenteil angeordnet ist. Die Kunststoffbuchse weist ein sich trichterförmig erweiterndes Ende auf, in das ein konischer Kopf des Steckerteils greift. Bei einer Ausführungsform kann eine Keil-Spanneinrichtung dazu vorgesehen werden, den konischen Kopf in die Kunststoffbuchse zu drücken. Die Dichtungsverhältnisse an dem O-Ring werden dabei jedoch durch die Durchmesser der Innenumfangsfläche des Buchsenteils bzw. der Außenumfangsfläche des Steckerteils bestimmt. Das Steckerteil und das Buchsenteil können mit einer Keil-Spanneinrichtung gegeneinander verspannt werden, wobei die jeweils erreichte relative Axialposition hinsichtlich der Dichtungsverhältnisse an dem O-Ring unbeachtlich sind.

Diese Kupplungseinrichtung erfordert ein genaues Einhalten der Innen- und Außendurchmesser der beteiligten Buchsen- und Steckerteile.

Davon ausgehend ist es Aufgabe der Erfindung, eine toleranzunempfindliche Verbindungseinrichtung zu schaffen, die sich für den Einsatz in Kraftfahrzeugen eignet.

Diese Aufgabe wird mit einer Verbindungseinrichtung nach Anspruch 1 gelöst.

Die erfindungsgemäße Verbindungseinrichtung weist zwei Verbindungselemente auf, die axial zusammengeführt werden und entsprechende axial orientierte Dichtflächen für ein Dichtungselement aufweisen. Zur Verbindung der Verbindungselemente miteinander und zur Sicherung dieser Verbindungselemente aneinander dient eine Keil-Spanneinrichtung mit wenigstens einem Spannkeil und wenigstens einem Gegenspannelement, die die Verbindungselemente gegeneinander spannen. Die Keil-Spanneinrichtung ist dabei so beschaffen, dass der Spannkeil und das Gegenspannelement mit ihren Keilflächen miteinander in Anlage stehen, wenn die Verbindung hergestellt ist. Die Keilflächen sind dabei vorzugsweise an geraden Keilen ausgebildet, so dass der Keil in einer linearen Einsteckbewegung in eines der Verbindungselemente eingesetzt werden kann. Der Keil ist in montiertem Zustand in seinem aktiven Bereich, d.h. ein weiteres Eindrücken des Keils in das Verbindungselement würde noch festeres Spannen der Verbindungselemente gegeneinander bewirken. Dadurch wird ein Toleranzausgleich erreicht, d.h. kleinere Fertigungstoleranzen werden durch mehr oder weniger tiefes Einstecken des Spannkeils ausgeglichen.

Durch die Keil-Spanneinrichtung lassen sich axiale Kräfte erzielen, die in das Dichtungselement eingeleitet werden, die wesentlich höher sind als bei Steckverbindungen, in denen das Dichtungselement an radial orientierten Flächen (Zylinderflächen) anliegt. Die von der Keil-Spanneinrichtung aufgebrachte Kraft kann vollständig an dem Dichtungselement wirksam werden, wodurch sehr hohe Presskräfte erzielbar sind. Solche hohen Kräfte können sonst von Hand beim Zusammenstecken von Verbindungen nicht aufgebracht werden.

Die Keil-Spanneinrichtung ermöglicht dank der hohen, von ihr aufgebrachten, Kraft die Verwendung von Dichtelementen, die eine hohe Dichtkraft erfordern. Bspw. können Dichtelemente verwendet werden, die sich in die axial orientierten Dichtflächen einschneiden (z.B. kurzer Rohrstücke mit geschärften Stirnseiten) oder die beim Pressvorgang dauerhaft deformiert werden. Bei Verwendung elastischer Dichtelemente kann eine höhere Deformation erreicht werden, als bei Verbindungseinrichtungen mit zylindrischen oder radial orientierten Dichtflächen, bei denen eine Relativbewegung zwischen den Verbindungselementen quer zur Deformierungsrichtung noch dann stattfindet, wenn das Dichtungselement bereits deformiert ist. Ein wesentlicher Vorzug der erfindungsgemäßen Verbindungseinrichtung liegt darin, dass die Deformation des Dichtungselements erst unter der Wirkung der Keilspanneinrichtung und in Zusammenführungsrichtung stattfindet, wenn die Verbindungselemente bereits zusammengeführt sind.

Der Spannkeil ist vorzugsweise so flach, dass er selbsthemmend ist. Dies bedeutet, dass eine axiale Belastung der Verbindungselemente keine Verschiebung des Spannkeils bewirkt. Vorzugsweise beträgt der Keilwinkel 1° bis 15°. Der Keil kann zusätzlich mit einer Arretierungseinrichtung versehen sein, die ihn in eingestecktem Zustand sichert. Die Arretierungseinrichtung weist dabei vorzugsweise mehrere Arretierungspositionen auf, so dass sowohl tief eingesteckte Keile als auch weniger tief eingesteckte Keile jeweils am Platz gesichert sind. Die Arretierungseinrichtung kann dabei sowohl stufenlos als auch mit vorgegebenen Arretierungspositionen ausgebildet sein. Ersteres wird bspw. im einfachsten Falle dadurch erreicht, dass der Spannkeil vor dem Einstecken in das entsprechende Verbindungselement mit einem Haft- oder Klebstoff versehen wird, der den Spannkeil im eingesteckten Zustand am Platz sichert. Die Aktivierung des Klebstoffs kann durch Wärme, durch mechanische Belastung (Druck) oder chemisch erfolgen.

Bevorzugt wird jedoch eine formschlüssige Sicherung des Spannkeils, bspw. durch eine mehrstufige Rasteinrichtung. Diese kann durch eine an der Außenumfangsfläche eines Verbindungselements vorgesehene Verzahnung gebildet sein, an der ein mit dem Keil verbundener federnder Rastfinger entlang gleitet.

Das Dichtungselement der Verbindungseinrichtung ist vorzugsweise ein O-Ring. Dieser wird beim Zusammenführen der Verbindungselemente in Axialrichtung gespannt. Dies stellt zunächst einmal unabhängig von sonstigen Toleranzen sicher, dass der O-Ring in montiertem Zustand tatsächlich im Presssitz an dem ihm zugeordneten Dichtflächen anliegt. Bedarfsweise können jedoch auch andere Dichtungselemente oder mehrere O-Ringe vorgesehen werden.

Anstelle eines O-Rings kann auch ein kombiniertes Dichtungselement vorgesehen werden, das bspw. einen elastischen ringförmigen Abschnitt und einen zweiten Abschnitt aufweist, der ebenfalls ringförmig ausgebildet sein kann und dazu dient, die Deformation des ersten Abschnitts des Dichtungselements in Axialrichtung zu begrenzen. Dieser zweite weniger elastische steifere Abschnitt kann ein ringförmig geschlossenes Element sein, das zwei einander gegenüberliegende, von einander wegweisende Flachseiten aufweist, die mit entsprechenden Abstützflächen der Verbindungselemente in Anlage kommen. Mit einem solchen Dichtungselement lassen sich bei einfacher Bauform hohe Dichtigkeiten (geringste Leckraten) erreichen.

Bei einer bevorzugten Ausführungsform ist dem Dichtelement benachbart ein rohr- oder ringförmiger Abstützabschnitt angeordnet, der eine Abstützfläche aufweist. Der genannte Abschnitt ist koaxial zu dem O-Ring angeordnet und dient der Abstützung des in das betreffende Verbindungselement einzuschiebenden Verbindungselements. Der Abstützabschnitt weist eine ringförmige geschlossene Abstützfläche auf, an der das andere Verbindungselement mit einer entsprechenden Abstützfläche spaltfrei anliegt. Die Klemmkraft des Keils dient nur im ersten Teil der Klemmbewegung der Verformung des O-Rings oder des anderweitigen Dichtelements. Sobald die Abstützflächen aneinander anliegen, spannt der Keil die Abstützflächen fest gegeneinander. Dadurch wird zum einen ein definierter Sitz des O-Rings, und zwar unabhängig von den beteiligten Toleranzen, und zum anderen eine axial festgespannte Verbindung zwischen den Verbindungselementen erreicht. Die Ausrichtung der Verbindungselemente gegeneinander wird durch die Abstützflächen bewirkt, die einen kippelfreien Sitz und somit eine ordnungsgemäße Einspannung des O-Rings gewährleisten.

Die Abstützflächen weisen bei einer bevorzugten Ausführungsform einen Durchmesser auf, der größer ist als der Durchmesser des O-Rings. Dies bedeutet, dass das Abstützelement oder der Abstützteil radial außerhalb des O-Rings koaxial zu diesem angeordnet ist. Dies hat erhebliche Bedeutung für die Dichtigkeit der Verbindungseinrichtung, die dadurch zur nahezu vollkommen leckfreien Verbindung werden kann. Die Abstützflächen schließen miteinander einen verschwindenden Spalt ein, der nach innen zu dem abzudichtenden Volumen hin von dem O-Ring verdeckt ist. An seiner dem abzudichtenden Volumen (Fluidkanal) zugewandten Seite weist der O-Ring eine relativ große, dem Fluid zugängliche Fläche auf. Zur Atmosphäre, d.h. nach außen hin weist der O-Ring jedoch lediglich die den Spalt überdeckende Fläche auf, die nahezu Null ist, wenn der Spalt geschlossen ist. Durch den O-Ring diffundierendes Fluid findet deshalb an der Außenseite keine nennenswerte Fläche vor, über die es ins Freie gelangen könnte. Das Flächenverhältnis von Innenfläche zu Außenfläche ist somit nahezu unendlich groß, wodurch eine absolute Minimierung der Leckagen erreicht wird. Die Verbindungseinrichtung kann als dauerhaft dicht angesehen werden. Sie ist darüber hinaus durch die feste Verspannung der Abstützflächen gegeneinander vibrationsfest und mit einfachsten Mitteln montierbar.

Die Abstützflächen können Planflächen sein. Bedarfsweise können sie jedoch auch eine gewisse Wölbung aufweisen. Planflächen werden wegen der einfachen Herstellung und den übersichtlichen Dichtverhältnissen bevorzugt.

Bei Bedarf kann auch eine der Abstützflächen mit einem Profil, bspw. einer Rippe versehen sein, die sich in die andere Abstützfläche einschneidet oder an dieser deformiert. Dies kann eine weitere Verbesserung der Verbindung ergeben.

Die Verbindungseinrichtung ist vorzugsweise zu einer Längsmittelebene symmetrisch aufgebaut, wobei zwei Spannkeile Anwendung finden, die an einander diametral gegenüberliegenden Seiten der Verbindungseinrichtung in entsprechende Spannöffnungen eingesetzt werden. Beide Keile sind dabei vorzugsweise gleich orientiert, so dass sie in gleicher Richtung in ihre Öffnungen eingeschoben werden. Die Spannkeile können durch einen Steg untereinander verbunden werden, wodurch ein jochartig geformter Doppelkeil erhalten wird. Der Vorzug dieser Ausführungsform liegt in der symmetrischen Einleitung der Spannkraft in das durch den Keil zu spannende Verbindungselement, was zu einem sicheren Sitz desselben führt. Es hat sich gezeigt, dass dazu zwei zueinander parallele Keile, die auf beiden Seiten des rohrförmigen Verbindungselements eingesetzt werden, ausreichend sind. Die Montage ist einfach.

Bei einer vorteilhaften Ausführungsform ist eine von den Verbindungselementen getrennte Abstützeinrichtung vorgesehen. Diese Ausführungsform hat den Vorzug, dass unter Zugrundelegung gleicher Verbindungselemente bedarfsentsprechende, unterschiedliche Dichtungselemente verwendet werden können. Das erforderliche Quetschmaß, um das das Dichtungselement axial zusammengedrückt wird, kann dann durch das Abstützelement für das Dichtungselement individuell festgelegt werden.

Weitere Einzelheiten vorteilhafter Ausführungsformen der Erfindung ergeben sich aus der Zeichnung oder der nachfolgenden Beschreibung und/oder sind Gegenstand von Unteransprüchen.

In der Zeichnung sind Ausführungsbeispiele der Erfindung veranschaulicht. Es zeigen:
Fig. 1 eine Verbindungseinrichtung in montiertem Zustand und in perspektivischer Darstellung,
Fig. 2 die Verbindungseinrichtung nach Figur 1, in quer geschnittener Darstellung,
Fig. 3 die Verbindungseinrichtung nach Figur 1, in längs geschnittener Darstellung,
Fig. 4 die Verbindungseinrichtung nach Figur 1, in nichtmontiertem Zustand und in Perspektivdarstellung,
Fig. 5 die Verbindungseinrichtung nach Figur 4, in quer geschnittener Darstellung,
Fig. 6 die Verbindungseinrichtung nach Figur 4, in längs geschnittener Darstellung,
Fig. 7 eine Spannkeilanordnung für die Verbindungseinrichtung nach den Figuren 1 bis 6, in Perspektivdarstellung und in einem anderen Maßstab,
Fig. 8 ein Verbindungselement für die Verbindungseinrichtung nach den Figuren 1 bis 6, in Perspektivdarstellung und in einem anderen Maßstab,
Fig. 9 eine abgewandelte Ausführungsform der Verbindungseinrichtung in noch nicht vollständig montiertem Zustand, in längs geschnittener Darstellung,
Fig. 10 die Verbindungseinrichtung nach Figur 9, in vollständig montiertem Zustand und in längsgeschnittener Darstellung,
Fig. 11 eine abgewandelte Ausführungsform der Verbindungseinrichtung, in Perspektivdarstellung,
Fig. 12 die Verbindungseinrichtung nach Figur 11, in längs geschnittener Darstellung, und
Fig. 13 eine alternative Ausführungsform der Erfindung, in längs geschnittener Darstellung.

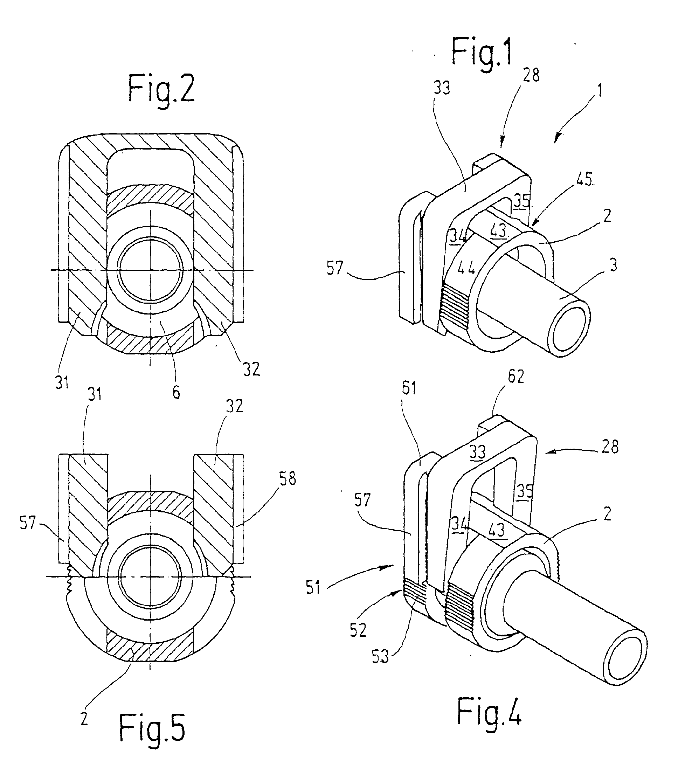

In Figur 1 ist eine Verbindungseinrichtung 1 veranschaulicht, die als Schnellkupplung für zwei Fluidleitungen dient. Zu der Verbindungseinrichtung 1 gehört ein erstes Verbindungselement 2 und ein zweites Verbindungselement 3, die, wie aus Figur 3 hervorgeht, jeweils einen Fluidkanal 4, 5 umschließen und miteinander in fluiddichter Verbindung stehen.

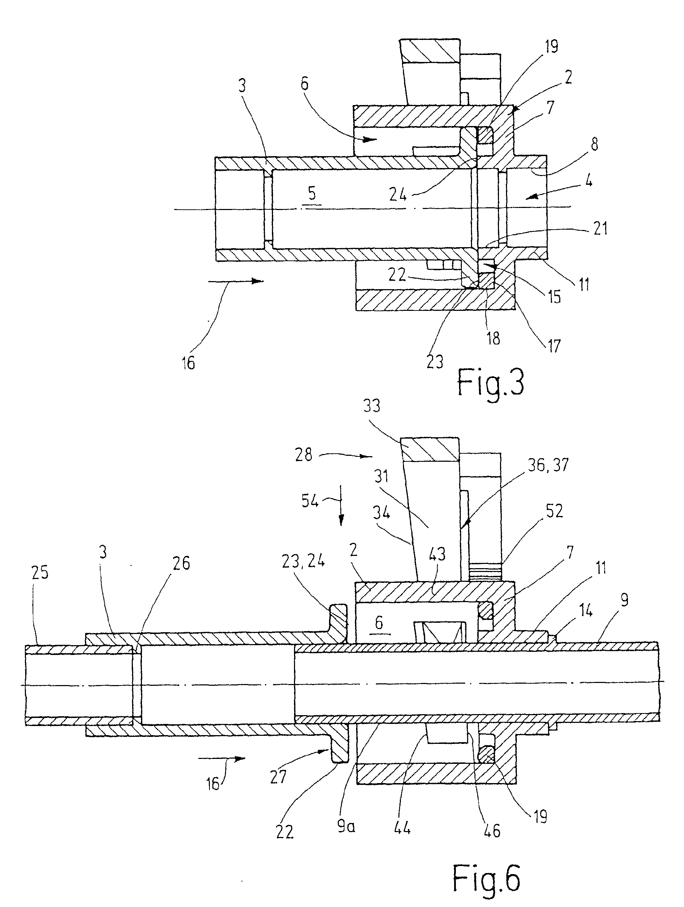

Das erste Verbindungselement 2 weist einen etwa zylindrischen und einseitig offenen Einsteckraum 6 auf, in den das Verbindungselement 3 einführbar ist. Der Einsteckraum 6 ist in dem außen etwa zylindrisch geformten und als Anschlussstück ausgebildeten Verbindungselement 2 ausgebildet, das an einer Seite durch eine Stirnwand 7 geschlossen ist. Die Stirnwand 7 weist eine Anschlussöffnung 8 auf, die entweder den Fluidkanal 4 direkt umschließt oder dem Anschluss eines Rohrendes 9 dient, wie es bspw. aus Figur 6 ersichtlich ist.

Die Anschlussöffnung 8 wird von einem rohrförmigen Ansatzteil 11 umgrenzt, das einstückig mit der Stirnwand 7 verbunden ist und sowohl nach außen (in Figur 3 nach rechts), als auch in den Einsteckraum 6 hinein (in Figur 3 nach links) über die Stirnwand 7 ragt. An seiner inneren Wandung kann der Ansatzteil 11 mit einer ringförmigen Rippe 12 versehen sein, die als definierter Anschlag für ein einzuschiebendes Rohrende dient. Alternativ kann, wie Figur 6 veranschaulicht, auf die Rippe 12 verzichtet werden und eine entsprechende Ringwulst oder Rippe 14 an der Außenseite des anzuschließenden Rohrendes 9 vorgesehen sein. Die Rippe 14 kann dabei so positioniert sein, dass das Rohrende 9 in den Einsteckraum 6 ragt oder diesen durchragt.

Das Rohrende 9 ist mit dem Verbindungselement 2 vorzugsweise unlösbar verbunden, bspw. durch eine Klebeverbindung, eine Schweißverbindung oder durch eine Aufpressverbindung. Letzteres ist erreichbar, indem der Innendurchmesser der Anschlussöffnung 8 kleiner ist als der Außendurchmesser des Rohrendes 9. Bedarfsweise kann die vorzugsweise zylindrisch ausgebildete Anschlussöffnung 8 auch konisch ausgebildet sein, um einen Aufpressvorgang zu erleichtern. Bedarfsweise kann auch eine Schraubverbindung vorgesehen werden, indem bspw. in der Wandung der Anschlussöffnung 8 ein selbstschneidendes Gewinde vorgesehen wird.

Zwischen dem in den Einsteckraum 6 vorstehenden Abschnitt des Ansatzteils 11 und der inneren Zylinderwandung des Einsteckraums 6 ist ein Abstand vorhanden, so dass letztendlich ein ringförmiger nutartiger Aufnahmeraum 15 ausgebildet ist, der entgegen der Einsteckrichtung des Verbindungselements 3 offen ist. Die Einsteckrichtung ist in den Figuren 3 und 6 durch einen Pfeil 16 markiert.

Der Aufnahmeraum 15 ist durch eine axiale Dichtfläche 17 und eine radial orientierte Dichtfläche 18 begrenzt. Die axiale Dichtfläche 17 ist vorzugsweise eine ebene Ringfläche. Bedarfsweise kann diese Dichtfläche 17 jedoch auch konisch oder leicht gewölbt ausgebildet sein. Die Dichtfläche 18 ist vorzugsweise eine Zylinderfläche, die Fläche kann bedarfsweise jedoch auch leicht konisch oder gewölbt ausgebildet sein. Wenn dies fertigungstechnisch akzeptiert wird, kann sich bspw. der Durchmesser der Dichtfläche 18 in Einsteckrichtung (in Figur 3 von links nach rechts) etwas erweitern.

Die Dichtflächen 17, 18 dienen als Anlage- und Sitzflächen für ein ringförmiges Dichtungselement 19, wie bspw. einen O-Ring oder ein anderes aus einem Elastomere bestehendes Dichtungselement mit rechteckigem Schnurquerschnitt oder mit Dichtlippe. Der Außendurchmesser des Dichtungselements 19 ist vorzugsweise etwas größer als der Innendurchmesser der Dichtfläche 18, so dass das Dichtungselement 19 reibschlüssig in dem Aufnahmeraum 15 gehalten ist. Der Schnurdurchmesser des Dichtungselements 19 (Querschnitt) ist größer, als die Tiefe des Aufnahmeraums 15 gemessen in Einsteckrichtung 16. Dazu ist der Überstand des Ansatzteils 11 über die Dichtfläche 17 hinaus entsprechend geringer, als der Querschnittsdurchmesser des Dichtungselements 19.

Der Ansatzteil 11 weist an seiner dem Einsteckraum 6 zugewandten Stirnseite eine ringförmige Abstützfläche 21 auf, die vorzugsweise als ebene Fläche ausgebildet ist und die koaxial zu dem Dichtungselement 19 angeordnet ist. Die Abstützfläche 21 liegt vorzugsweise innerhalb des Dichtungselements. Der Abstand zwischen der Abstützfläche 21 und der Dichtfläche 18 legt gemessen in Einsteckrichtung 16 die Höhe des Aufnahmeraums 15 fest.

Das Verbindungselement 3 ist im Wesentlichen als Rohrstück mit endseitigem Ringflansch 22 ausgebildet. Dieser weist an seiner dem Aufnahmeraum 15 zugewandten Seite eine Ringfläche auf, deren äußerer Teil als ringförmige Dichtfläche 23 und deren innerer Teil als ringförmige Abstützfläche 24 dient. Sowohl die Dichtfläche 23 als auch die Abstützfläche 24 können jeweils plan oder auch konisch oder gewölbt ausgebildet sein. Bevorzugt werden wegen der einfachen Herstellung und der übersichtlichen Dicht- bzw. Abstützverhältnisse Planflächen. Damit liegt die Abstützfläche plan (spaltfrei) an der Abstützfläche 21 an.

Zum Anschluss eines Rohrs oder einer sonstigen Leitung an das Verbindungselement 3 kann ein entsprechendes Leitungsende 25 in dem rohrförmigem Fortsatz des Verbindungselements 3 eingeschoben werden. Zur Begrenzung der Einschubtiefe kann, wie die Figuren 3 und 6 andeuten, eine ringförmige innere Rippe 26 an der Innenumfangsfläche des Verbindungselements 3 vorgesehen sein. Der Innendurchmesser des Verbindungselements 3 kann zu beiden Seiten der Rippe 26 übereinstimmend festgelegt sein. Bedarfsweise kann jedoch auch an der dem Verbindungselement 2 zugewandten Seite ein etwas größerer Durchmesser gewählt sein, um das Aufschieben auf ein das Verbindungselement 2 durchragendes Rohrende 9 (Figur 6) zu erleichtern. Zur Verbindung zwischen dem Leitungsende 25 und dem Verbindungselement 3 können Klebeverbindungen, Schraubverbindungen, Pressverbindungen, Schweißverbindungen und andere Verbindungsverfahren bzw. Möglichkeiten dienen. Bevorzugt werden wegen ihrer Verlässlichkeit Klebe- und Schweißverbindungen oder andere stoffschlüssige Verbindungen.

Der Außendurchmesser des Ringflanschs 22 ist vorzugsweise lediglich geringfügig kleiner als der Innendurchmesser des Einsteckraums 6. An seiner dem Aufnahmeraum 15 abgewandten Seite weist der Ringflansch 22 eine ebene Fläche (Planfläche) 27 auf, die als Druck- oder Spannfläche dient, um das Verbindungselement 3 in Richtung des Pfeils 16 gegen das Verbindungselement 2 zu spannen.

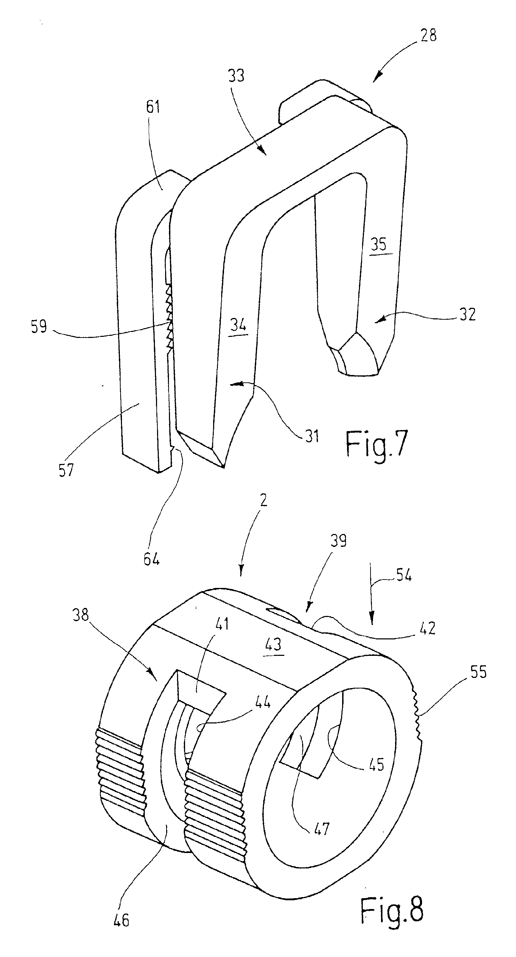

Dazu dient ein gesondert in Figur 7 veranschaulichtes Keilelement 28, zu dem zwei zueinander parallel angeordnete und gleich orientierte Keile 31, 32 gehören, die untereinander durch einen Steg 33 verbunden sind. Damit bilden die Keile 31, 32 die Schenkel eines U-förmigen Grundkörpers. Der Abstand der Keile 31, 32 voneinander stimmt etwa mit dem Außendurchmesser des Verbindungselements 3 überein, wobei die aufeinander zuweisenden Flanken der Keile 31, 32 parallel zueinander orientiert sind.

Der Keil 31 weist eine Keilfläche 34 auf, die als ebene Planfläche ausgebildet ist und mit einer planen Keilfläche 35 des Keils 32 in einer gemeinsamen Ebene liegt. Die Planflächen 34, 35 sind, wenn das Keilelement 28, wie in Figur 4 angedeutet, mit dem Verbindungselement 2 in Eingriff gebracht wird, im Wesentlichen axial orientiert, d.h. ihre Flächennormale stimmt ungefähr mit der Axialrichtung der anzuschließenden Leitungen überein. An den gegenüberliegenden Seiten weisen die Keile 31, 32 ebenfalls Planflächen 36, 37 auf, die in einer gemeinsamen Ebene liegend angeordnet sind. Figur 6 veranschaulicht die Planfläche 36 des Keils 31 - die Planfläche 37 findet sich an dem Keil 32 an entsprechender Stelle. Die Keilflächen 34, 35 schließen mit den Planflächen 36, 37 einen spitzen Winkel ein, der vorzugsweise etwa 10° beträgt oder noch geringer ist. Dieser spitze Winkel wirkt als Keilwinkel, wobei ein Keilwinkel deutlich unter 10° die Selbsthemmung der Keile 31, 32 begünstigt.

Den Keilen 31, 32 sind, wie insbesondere Figur 8 veranschaulicht, Ausnehmungen 38, 39 zugeordnet, die schlitzartig geformt sind und die Wandung des Verbindungselements 2 durchsetzen. Die Ausnehmungen 38, 39 sind so tief, dass der Einsteckraum 6 durch die Ausnehmungen 38, 39 zugänglich ist. Zwischen den Ausnehmungen 38, 39 verbleibt ein durch Bodenflächen 41, 42 begrenzter Steg 43, dessen Breite etwa dem Abstand der Keile 31, 32 voneinander entspricht. Dieser Abstand ist etwa so groß wie der Außendurchmesser des Verbindungselements 3.

Die Ausnehmungen 38, 39 sind, wie aus Figur 6 und 8 hervorgeht, an ihrer von der Stirnwand 7 abliegenden Seite durch Schrägflächen 44, 45 begrenzt, die die gleiche Orientierung aufweisen wie die Keilflächen 34, 35. Den Schrägflächen 44, 45 liegen Begrenzungsflächen 46, 47 gegenüber, die parallel oder spitzwinklig zu den Schrägflächen 44, 45 orientiert sein können. Der Abstand zwischen den Begrenzungsflächen 46, 47 und den Schrägflächen 44, 45 ist so groß, dass die Keile 31, 32 in die Ausnehmungen 38, 39 eingeschoben werden können, bis der Steg 33 auf dem Steg 43 aufliegt. Die Keile 31, 32 bilden mit den an dem Verbindungselement 2 ausgebildeten Schrägflächen 44, 45 eine Keil-Spanneinrichtung, die eine Einsteckbewegung der Keile 31, 32 linear und proportional in eine Spannbewegung umsetzt. Maßtoleranzen der Verbindungselemente 2, 3 können durch unterschiedliche Einstecktiefen der Keile ausgeglichen werden.

Die Breite der Keilflächen 34, 35 und somit die Breite der Keile 31, 32 entspricht bei einer vorteilhaften Ausführungsform etwa der Tiefe der Ausnehmungen 38, 39, d.h. die Keile 31, 32 schließen, wie insbesondere aus den Figuren 2 und 5 hervorgeht, an ihrer Außenseite bündig mit dem Verbindungselement 2 ab.

An ihren freien Enden können die Keile 31, 32, wie insbesondere aus Figur 7 hervorgeht, mit Einführhilfen und Einführschrägen versehen sein. Außerdem können die Keilflächen 34, 35 und die Schrägflächen 44, 45 gewölbt sein, z.B. um den Keilen 31, 32 eine verbesserte Seitenführung zu geben.

Zur Sicherung des Keilelements 28 an dem Verbindungselement 2 kann das Keilelement 28 mit einer Rasteinrichtung 51 versehen sein. Zu dieser gehört bspw. eine an der Außenseite des Verbindungselements 2 in Nachbarschaft der Ausnehmung 38, 39 vorgesehene Verzahnung 52, die wenigstens einen einzigen Zahn aufweist und deren einzelne Zähne 53 axial orientiert sind. Die Zähne können, wie Figur 8 veranschaulicht, nach Art von Sägezähnen ausgebildet sein, die quer zu der in Figur 8 mit einem Pfeil 54 orientierte Anlageflächen 55 und schräg zu der Einsteckrichtung (Pfeil 54) orientierte Abweisflächen 56 aufweisen.

Der Verzahnung 52 sind Rastbügel 57, 58 zugeordnet, die jeweils mit einem Ende 61, 62 mit dem Keilelement 28, bspw. an seinem Steg 33, verbunden sind. Die Rastbügel 57, 58 weisen dabei eine gewisse Federelastizität auf, insbesondere wenn das Keilelement 28 aus Kunststoff gefertigt ist, wie es bevorzugt wird. An ihrer Innenseite tragen die Rastbügel 57, 58 wenigstens einen Zahn oder eine zu der Verzahnung 52 komplementäre Verzahnung, die gemäß der Feinheit der Verzahnung mehrere Rastpositionen des Keilelements 28 an dem Verbindungselement 2 festlegt. Diese Verzahnung 59 (Figur 7) kann sich über die gesamte Innenseite der Rastbügel 57, 58 erstrecken oder, wie in Figur 7 veranschaulicht, unterbrochen sein. Gemäß Figur 7 weist der Rastbügel 57 an seinem freien Ende einen einzelnen Zahn 64 auf, der der Lagerung des Keilelements 28 an dem Verbindungselement 2 in Steck- und Löseposition dient. Zwischen dem Zahn 64 und der übrigen Verzahnung 59 ist ein Abstand vorhanden.

Die insoweit beschriebene Verbindungseinrichtung 1 arbeitet folgendermaßen:

Zur Herstellung einer Fluidverbindung zwischen zwei Leitungen mittels der Verbindungseinrichtung 1 wird zunächst das Keilelement 28 an dem Verbindungselement 2 in die in Figur 4 veranschaulichte Position gebracht, in der die freien Enden der Rastbügel 57, 58 auf der Verzahnung 52 sitzen und die freien Enden der Keile 31, 32, wie insbesondere Figur 5 veranschaulicht, den Einsteckraum 6 weitgehend freigeben.

Wie Figur 6 veranschaulicht, sind die Verbindungselemente 2, 3 bereits mit entsprechenden Leitungsenden 9, 25 verbunden. Es wird nun das Verbindungselement 3 in den Einsteckraum 6 eingeführt, wobei es sich ggfs. auf ein Ende 9a des Rohrendes aufschiebt, das den Einsteckraum 6 durchragt. In jedem Fall aber wird das Verbindungselement 3 so weit in den Einsteckraum 6 eingeführt, dass die Planfläche 27 die Begrenzungsfläche 46, 47 hintergreift oder etwa in gleicher Höhe ankommt. In diesem Zustand wird das Keilelement 28 in der in Figur 6 durch den Pfeil 54 markierten Einsteckrichtung so auf das Verbindungselement 2 zubewegt, dass sich der Steg 33 an den Steg 43 annähert. Die Enden der Keile 31, 32 treten dadurch in den Einsteckraum 6 ein, wie insbesondere Figur 2 veranschaulicht. Dadurch kommen die Keilflächen 34, 35 mit den Schrägflächen 44, 45 in Anlage (Figur 1). Die Keile 31, 32 drücken deshalb mit ihren Planflächen 36, 37 gegen die Planfläche 27 des Ringflanschs 22. Dieser wird dadurch zunächst gegen den O-Ring 19 gepresst, wodurch sich der O-Ring 19 deformiert. Letztendlich findet die Abstützfläche 24 des Ringflanschs 22 feste Anlage an der Abstützfläche 21, wodurch die Deformation des Dichtungselements 19 begrenzt wird. Das Keilelement 28 wird nun fest an das Verbindungselement 2 angedrückt, bis mit normalen Betätigungskräften keine weitere Bewegung mehr möglich ist. Die Abstützflächen 21, 24 sind nun fest gegeneinander gespannt, wodurch ein mechanisch fester Sitz gegeben ist. Die Rastbügel 57, 58 stehen mit ihren Verzahnungen 59 mit der Verzahnung 52 in Eingriff und sichern das Keilelement in dieser Klemmstellung. Das Dichtungselement 19 dichtet die Verbindung fluiddicht ab.

Die Verbindung ist auf einfache Weise herzustellen und ist ungeachtet von Fertigungstoleranzen, die den Durchmesser der Verbindungselemente 2, 3 sowie die Länge dieser Verbindungselemente betreffen, prozesssicher zu montieren und herzustellen. Darüber hinaus wird eine gute Dichtigkeit sichergestellt.

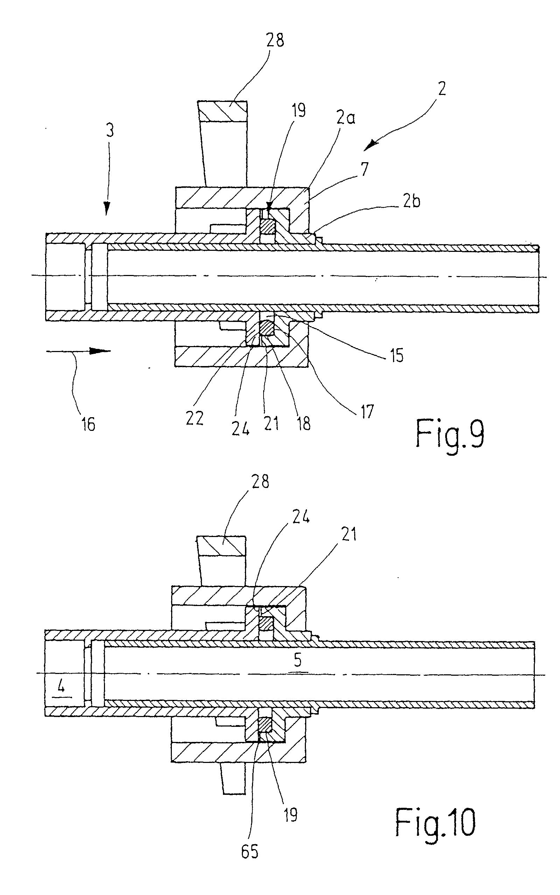

Die Dichtigkeit kann mit der Ausführungsform nach Figur 9 und 10 noch verbessert werden. Der wesentliche Unterschied zu der vorbeschriebenen Ausführungsform besteht darin, dass die Abstützfläche 21 nicht wie bei dem vorbeschriebenen Ausführungsbeispiel innerhalb des Dichtungselements 19, sondern außerhalb desselben angeordnet ist. Dazu weist das Verbindungselement 3 in dem Einsteckraum 6 eine den Aufnahmeraum 15 umgebende Innenschulter 65 auf, die eine als Abstützfläche 21 dienende Ringfläche festlegt. Diese Ringfläche ist bspw. eine Planfläche und schließt unmittelbar an die radiale Dichtfläche 18 an. Der Abstand der Ringfläche von der Dichtfläche 17 ist gemessen in Einsteckrichtung 16 wiederum etwas geringer als der Schnurdurchmesser des Dichtungselements 19, so dass das Dichtungselement 19 im Quetschsitz gehalten ist, wenn der Ringflansch 22 an der Ringfläche (Abstützfläche 21) anliegt. Entsprechend ist an dem Ringflansch die Abstützfläche 24 in einem radial äußeren Bereich vorgesehen, während die Dichtfläche 23 in einem radial inneren Bereich angeordnet ist und einen Radius aufweist, der etwa dem Radius des Dichtungselements 19 entspricht. Zum Spannen der Verbindungselemente 2, 3 gegeneinander dient die Keil-Spanneinrichtung mit Spannkeilen 31, 32 und den Schrägflächen 44, 45 als Gegenspannelement.

Diese Ausführungsform der Verbindungseinrichtung 1 eignet sich insbesondere zur Kupplung von Fluidkanälen, die ein Fluid führen, das dazu neigt, durch das Dichtungselement 19 zu diffundieren. An der dem Fluidkanal 4, 5 zugewandten Seite ist das Dichtungselement (O-Ring) 19 mit einer Fläche dem Fluid ausgesetzt, die etwa der Länge des Aufnahmeraums, multipliziert mit dem Innenumfang des Dichtungselements 19, entspricht. Über diese Fläche kann der O-Ring 19 Fluid aufnehmen, soweit es in das Elastomermaterial eindringen kann. Abgegeben werden kann das Fluid nach außen jedoch nur durch den zwischen den Abstützflächen 21, 24 eingeschlossenen Spalt, dessen Weite praktisch Null ist. An diesem Spalt liegt das Dichtungselement 19 unter Druck an. Damit ist die Fläche, über die der O-Ring Fluid abgeben kann, äußerst gering - praktisch Null. Durch das große (gegen unendlich gehende) Flächenverhältnis zwischen der Innenumfangsfläche des O-Rings und der den Spalt überbrückenden Fläche können die Diffusionsverluste minimiert und praktisch zu Null gemacht werden.

Ein weiterer Vorteil dieser Ausführungsform liegt in dem großen Radius der Abstützfläche, die durch die vorspannende Wirkung des Keils kippelfreien Sitz der Verbindungselemente 2, 3 aneinander sicherstellt.

Eine weitere Einzelheit der in den Figuren 9 und 10 veranschaulichten Ausführungsformen besteht darin, dass das Verbindungselement 3 zweiteilig ausgebildet ist. Es ist in einen äußeren Überwurfteil 3a und einen Einsatzteil 3b unterteilt. Der Überwurfteil 3a weist an seiner Stirnwand 7 eine Sitzöffnung 68 auf, in die das Einsatzteil 3b eingesetzt ist. Das Einsatzteil 3b wird im Wesentlichen durch eine mit einem zentralen Loch versehene Scheibe gebildet, die an ihrem äußeren Rand und um ihr inneres Loch herum jeweils einen rohrartigen Fortsatz aufweist. Die Fortsätze erstrecken sich in unterschiedlichen Richtungen von der Scheibe weg.

Die zweiteilige Bauform des Verbindungselements 3 ermöglicht eine einfachere Herstellung.

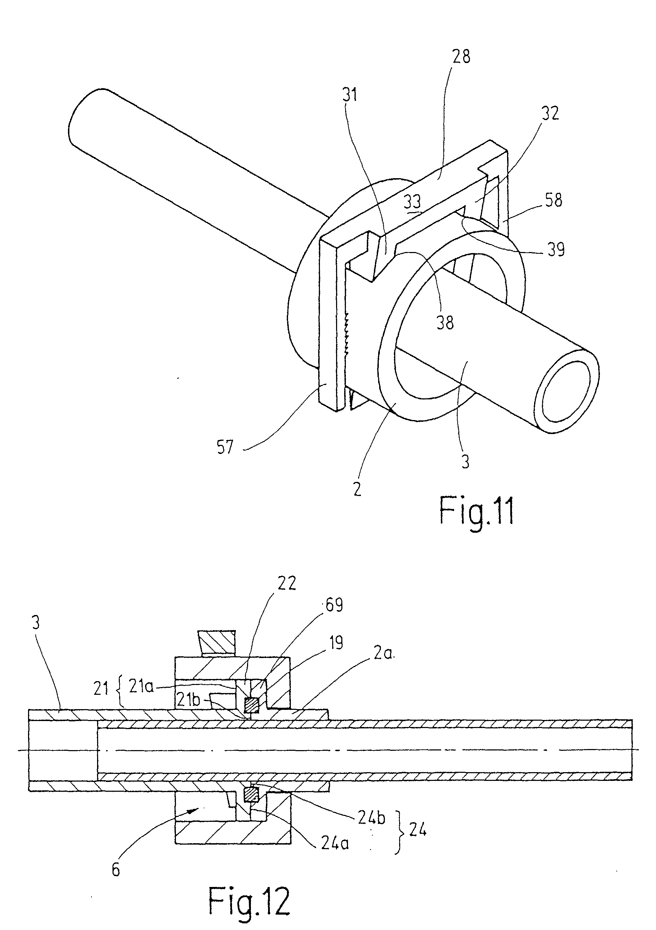

Eine weiter abgewandelte Ausführungsform der Verbindungseinrichtung 1 ist in den Figuren 11 und 12 veranschaulicht. Die Besonderheit dieser Ausführungsform besteht gegenüber der vorbeschriebenen Ausführungsform (Figuren 9 und 10) in dem Sitz des O-Rings 19. Dieser sitzt in einem Aufnahmeraum 15, der zur einen Hälfte als Ringnut in dem Ringflansch 22 und zur anderen Hälfte als Ringnut in der Stirnwand 7 oder einem entsprechenden an dem Einsatzteil 3a vorgesehenen Ringflansch 69 ausgebildet ist. Sowohl an dem Ringflansch 22 als auch an dem Ringflansch 69 ist die jeweilige Ringnut jeweils radial innen und radial außen von Teilen der Abstützfläche 21 bzw. 24 umgeben. Dies bedeutet, dass die Abstützfläche 21 des Verbindungselements 2 in eine äußere Abstützfläche 21a und eine innere Abstützfläche 21b unterteilt ist. In ähnlicher Weise ist die Abstützfläche 24 des Verbindungselements 3 in eine äußere Abstützfläche 24a und eine innere Abstützfläche 24b unterteilt. Es wird bevorzugt, die Abstützflächen 21a,b bzw. 24a,b so auszulegen bzw. axial zu positionieren, dass die axiale Abstützung vorwiegend an den außen liegenden Flächenbereichen 21a, 24a erfolgt. Dies kommt der Dichtigkeit in dem gleichen Sinne wie im Zusammenhang mit Fig. 9 und 10 erläutert zugute. Erreicht wird dies, indem die Flächenbereiche 21b und/oder 24b axial jeweils etwas hinter den Flächenbereichen 21a, 24a stehen. Es genügt eine Distanz von einigen 100stel oder 10tel Millimetern.

Bedarfsweise können in den Ringflanschen 22, 69 mehrere Ringnuten als Sitz für mehrere konzentrisch zueinander angeordnete Dichtungselemente vorgesehen werden. Diese Ausführungsform hat den Vorteil einer guten Dichtigkeit. Außerdem ist bei dieser Bauform der Durchmesser des Verbindungselements 3 etwas größer, d.h. der Einsteckraum 6 weist einen etwas größeren Durchmesser auf. Die Ausnehmungen 38, 39 können deshalb, wie Figur 11 veranschaulicht, weniger als Nuten, sondern vielmehr als Durchstecköffnungen ausgebildet sein. Dies hat den Vorteil, dass die Keile 31, 32 in den Ausnehmungen 38, 39 auch seitlich (in Radialrichtung) geführt sind. Die mechanische Beanspruchung des Stegs 33 ist deshalb wesentlich geringer. Damit kann die Sicherheit der Verbindungseinrichtung 1, insbesondere im Hinblick auf mechanische Belastung, erhöht werden. Zusätzlich können die Rastbügel 57, 58 zur ortsfesten Sicherung des Keilelements 28 vorgesehen sein.

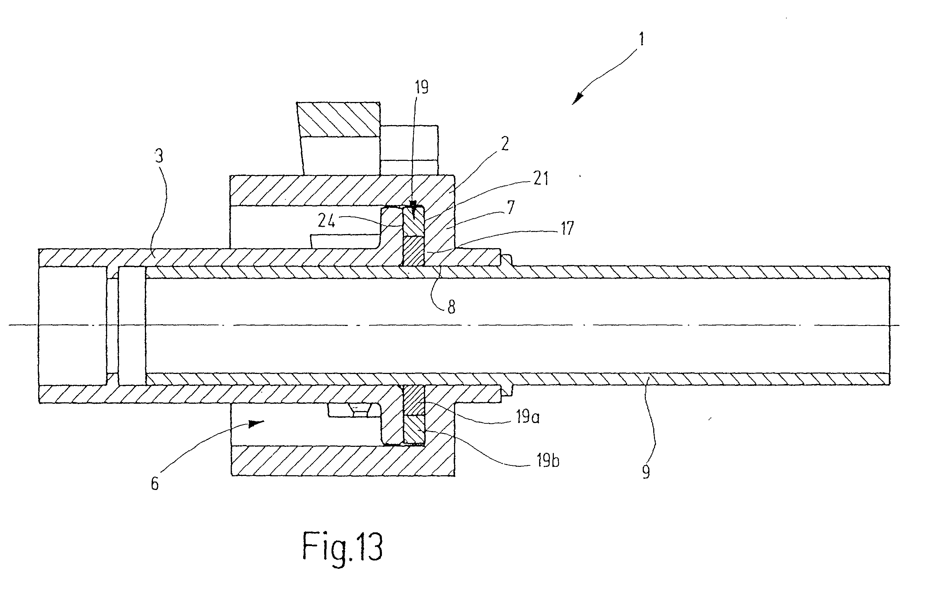

In Figur 13 ist eine weitere Ausführungsform der Verbindungseinrichtung 1 veranschaulicht, zu der ebenfalls, wie bei den vorstehend beschriebenen Ausführungsformen, zwei axial zusammenzuführende Verbindungselemente 2, 3 gehören. Das Verbindungselement 2 entspricht weitgehend dem in Figur 9 und 10 veranschaulichten Verbindungselement 2, mit dem Unterschied, dass es einstückig ausgebildet ist. An seiner Stirnwand 7 ist ein nach außen weisender rohrförmiger Fortsatz angeordnet, der mit dem anzuschließenden Rohr oder Schlauch 9 fluiddicht verbunden ist. An ihrer Innenseite weist die Stirnwand 7 eine ringförmige Planfläche auf, die als Abstütz- und Dichtfläche dient. Bei der vorliegenden Ausführungsform ist ein radial innenliegender Abschnitt dieser Fläche, der sich an die Durchgangsöffnung 8 anschließt, als Dichtungsfläche 17 vorgesehen. Ein äußerer Teil dieser Planfläche dient als Abstützfläche 21. Eine Ringschulter oder dergleichen als Anlagefläche für den Ringflansch 22 des Verbindungselements 3 ist in dem Einsteckraum 6 nicht vorgesehen.

Anstelle dessen ist das Dichtungselement 19 speziell ausgebildet. Es weist einen Dichtungsabschnitt 19a auf, der bspw. durch ein Elastomere, ein sonstiges elastisches Dichtungsmittel oder ggfs. auch durch ein plastisches Dichtungsmittel jeweils in Form eines geschlossenen Rings gebildet ist. In seinem äußeren Abschnitt 19b dient das Dichtungselement 19 als Abstützelement. Bspw. ist der Abschnitt 19b als Stützring aus einem festen Material, z.B. Metall oder einem technischen Kunststoff, ausgebildet. Dieser Stützring kann als geschlossener oder auch ein- oder mehrfach geschlitzter Ring ausgebildet sein. Es ist möglich, den Stützring fest mit dem Dichtungsabschnitt 19a zu verbinden, bspw. zu verkleben oder den Abschnitt 19a aus elastomerem Werkstoff anzuvulkanisieren. Alternativ kann der Abschnitt 19b ein Stützring sein, der mit dem Dichtungsabschnitt 19a nicht verbunden, nur bereichsweise stoffschlüssig verbunden oder anderweitig, z.B. formschlüssig verbunden ist. Die in Axialrichtung gemessene Dicke des Abstützelements 19b ist in allen Fällen geringer, als die in Axialrichtung gemessene Dicke (Ausdehnung) des als Dichtungsring dienenden Dichtungsabschnitts 19a.

Eine Verbindungseinrichtung 1 ist insbesondere als Schnellkupplungseinrichtung zur Verbindung von Fluidkanälen an Kraftfahrzeugen vorgesehen. Die Verbindungseinrichtung weist zwei axial gegeneinander zu spannende Verbindungselemente 2, 3 auf, die mit einem axial zu deformierenden Dichtungselement 19 abgedichtet sind. Die Deformation des Dichtungselements 19 wird durch mechanische Anschlagmittel (Abstützflächen 21, 24) begrenzt. Zur Spannung der Verbindungselemente 2, 3 gegeneinander dient eine Keil-Spanneinrichtung.

## Patentansprüche

1. Verbindungseinrichtung (1), insbesondere Schnellverbindungseinrichtung zum Anschluss von Fluidleitungen,
mit einem ersten Verbindungselement (2), das eine Leitungskanal (4) umschließt und einen ringförmigen Aufnahmeraum (15) aufweist, der eine ringförmige, axial orientierte Dichtfläche (17) und eine radial orientierte Dichtfläche (18) aufweist, wobei das Verbindungselement (2) eine ringförmige erste Abstützfläche (21) und eine Schrägfläche (44) aufweist,
mit einem ringförmigen Dichtungselement (19), das in dem Aufnahmeraum (15) angeordnet ist und an den Dichtflächen (17, 18) anliegt,
mit einem zweiten Verbindungselement (3), das einen Leitungskanal (5) umschließt und das eine ringförmige, axial orientierte Dichtfläche (23) für das Dichtelement (19) und eine ringförmige zweite Abstützfläche (24) aufweist, die in montiertem Zustand der Verbindungseinrichtung (1) an der ersten Abstützfläche (21) anliegt, und
mit einer Keil-Spanneinrichtung (28, 2, 2a) mit einem Keilelement (28), das wenigstens einen Keil (31) aufweist, der eine Keilfläche (34) zum axialen Spannen der Verbindungselemente (2, 3) gegeneinander aufweist, wobei die Keilfläche (34) des Keils (31) und die Schrägfläche (44) des ersten Verbindungselements (2) in montiertem Zustand miteinander in Anlage stehen.

2. Verbindungseinrichtung nach Anspruch 1, **dadurch gekennzeichnet, dass** das ringförmige Dichtungselement (19) ein O-Ring ist.

3. Verbindungseinrichtung nach Anspruch 1, **dadurch gekennzeichnet, dass** die radial orientierte Dichtfläche (23) des ersten Verbindungselements (2) spaltfrei an die Dichtfläche (18) des zweiten Verbindungselements (3) anschließt, wenn die Verbindungselemente (2, 3) gegeneinander gespannt sind.

4. Verbindungseinrichtung nach Anspruch 1, **dadurch gekennzeichnet, dass** die Abstützflächen (21, 24) Planflächen sind.

5. Verbindungseinrichtung nach Anspruch 1, **dadurch gekennzeichnet, dass** zu der Keil-Spanneinrichtung (28, 2, 2a) ein Haltekörper (2, 2a) gehört, der wenigstens eine quer zu seiner Längsrichtung (16) angeordnete Spannöffnung (38, 39) aufweist, in die ein Spannkeil (31, 32) einsetzbar ist.

6. Verbindungseinrichtung nach Anspruch 5, **dadurch gekennzeichnet, dass** der Haltekörper (2, 2a) zwei zueinander parallel angeordnete Spannöffnungen (38, 39) aufweist und dass die Spannöffnungen (38, 39) zwischen einander den Fluidkanal (4, 5) einschließen.

7. Verbindungseinrichtung nach Anspruch 5, **dadurch gekennzeichnet, dass** die Spannöffnungen (38, 39) durch Nuten gebildet sind.

8. Verbindungseinrichtung nach Anspruch 7, **dadurch gekennzeichnet, dass** die Nuten Keilnuten sind.

9. Verbindungseinrichtung nach Anspruch 1, **dadurch gekennzeichnet, dass** das zweite Verbindungselement (3) einen Ringflansch (22) aufweist der eine Spannfläche (27) für den Spannkeil (31, 32) aufweist.

10. Verbindungseinrichtung nach Anspruch 1, **dadurch gekennzeichnet, dass** der Spannkeil (31, 32) mit einer Arretierungseinrichtung (57, 58) verbunden ist.

11. Verbindungseinrichtung nach Anspruch 1, **dadurch gekennzeichnet, dass** der Spannkeil (31, 32) aus Kunststoff besteht.

12. Verbindungseinrichtung nach Anspruch 6, **dadurch gekennzeichnet, dass** den Spannöffnungen (38, 39) jeweils ein Spannkeil (31, 32) zugeordnet ist und dass die beiden Spannkeile (31, 32) untereinander durch einen Steg (33) verbunden sind.

13. Verbindungseinrichtung nach Anspruch 1, **dadurch gekennzeichnet, dass** an dem Verbindungselement (2) eine Abstützeinrichtung (21) angeordnet ist.

14. Verbindungseinrichtung nach Anspruch 1, **dadurch gekennzeichnet, dass** zwischen den Verbindungselementen (2, 3) eine Abstützeinrichtung (19b) angeordnet ist, die mit den Verbindungselementen (2, 3) unverbunden ist.
